# EUROPEAN PATENT SPECIFICATION

(11) **EP 3 192 778 B1**
(45) Date of publication and mention of the grant of the patent: **29.05.2019**
(21) Application number: 15839661.4
(22) Date of filing: 11.09.2015
(51) Int. Cl.: B32B 17/10

(54) **INTERLAYER FOR LAMINATED GLASS, AND LAMINATED GLASS**
ZWISCHENSCHICHT FÜR VERBUNDGLAS UND VERBUNDGLAS
COUCHE INTERMÉDIAIRE POUR VERRE FEUILLETÉ ET VERRE FEUILLETÉ

(30) Priority: 11.09.2014 JP 2014185384
(43) Date of publication of application: 19.07.2017
(73) Proprietor: Sekisui Chemical Co., Ltd., Osaka-shi, Osaka 530-8565 (JP)
(72) Inventor: YOSHIDA, Shougo, Kouka-shi Shiga 528-8585 (JP)
(74) Representative: Ter Meer Steinmeister & Partner
(86) International application number: PCT/JP2015/075931
(87) International publication number: WO 2016/039470

(56) References cited:
- DE-A1-102010 003 316
- JP-A- H05 104 687
- JP-A- H11 171 604
- JP-A- 2011 064 039
- JP-A- 2013 006 725
- JP-A- 2013 010 671
- US-A1- 2007 135 590
- US-A1- 2012 052 310
- US-A1- 2013 123 399
- DATABASE WPI Week 201048 8 July 2010 (2010-07-08) Thomson Scientific, London, GB; AN 2010-H85763 XP002778703, -& JP 2010 150099 A (ASAHI GLASS CO LTD) 8 July 2010 (2010-07-08)
- DATABASE WPI Week 201344 23 May 2013 (2013-05-23) Thomson Scientific, London, GB; AN 2013-J19124 XP002778704, -& WO 2013/073363 A1 (THREE BOND CO LTD) 23 May 2013 (2013-05-23)

## Description

### TECHNICAL FIELD

The present invention relates to an interlayer film for laminated glass which is used for laminated glass. Moreover, the present invention relates to laminated glass prepared with the interlayer film for laminated glass.

### BACKGROUND ART

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching an interlayer film for laminated glass between a pair of glass plates.

As an example of the interlayer film for laminated glass, the following Patent Document 1 discloses an interlayer film having a low tendency to turn yellow, having high transmittance for UV-A rays and visible light, and having low transmittance for UV-B rays. This interlayer film includes a polyvinyl acetal, a plasticizer and an oxanilide-type compound as a UV absorber. Moreover, Patent Document 1 describes that the interlayer film may include an HAS/HALS/NOR-HALS type non-aromatic light stabilizer.

The following Patent Document 2 discloses an interlayer film which is high in ultraviolet ray blocking characteristics and is capable of maintaining the optical quality over a long period of time. This interlayer film includes a polymer layer. The polymer layer contains a tungsten oxide agent and at least one kind among a molecule having a benzotriazole group and a polyvalent metal salt.

The following Patent Document 3 discloses an interlayer film with which the sound insulating properties in a high frequency area of laminated glass can be heightened over a wide temperature range. This interlayer film is provided with a first layer which contains a polyvinyl acetal resin and a plasticizer, a second layer which is layered on a first surface of the first layer and contains a polyvinyl acetal resin and a plasticizer, and a third layer which is layered on a second surface opposite to the first surface of the first layer and contains a polyvinyl acetal resin and a plasticizer. In this interlayer film, the content of the hydroxyl group of the polyvinyl acetal resin contained in the first layer is lower than the content of each hydroxyl group of the polyvinyl acetal resins contained in the second and third layers, and the ratio of the thickness of the first layer to the total thickness of the second layer and the third layer is 0.14 or less. Moreover, in Patent Document 3, a technique capable of obtaining laminated glass in which the generation of foaming and the growth of bubbles can be suppressed is described.

### Related Art Documents

### Patent Documents

Patent Document 1: US 2012/0052310 A1
Patent Document 2: US 2009/0035583 A1
Patent Document 3: WO 2012/043816 A1

### SUMMARY OF THE INVENTION

### PROBLEMS TO BE SOLVED BY THE INVENTION

At the end part of the sheet of laminated glass prepared with a conventional interlayer film, a gap is sometimes generated. In particular, this gap is easily generated when light, heat and the like are given to the sheet of laminated glass. This gap is a recess portion formed by the omission of the interlayer film at the end part of the sheet of laminated glass. This gap is different from a foamed product generated due to the foaming as described in Patent Document 3.

When a gap is generated at the end part of the sheet of laminated glass, the appearance of the sheet of laminated glass is deteriorated and the adhesive force between the interlayer film and a glass plate or the like is lowered.

Moreover, when a sheet of laminated glass is prepared with a conventional interlayer film, the yellow index (YI) value measured at the end part of the sheet of laminated glass is sometimes increased.

An object of the present invention is to provide an interlayer film for laminated glass making a gap difficult to be generated at an end part of the sheet of laminated glass and enabling an increase in the YI value measured at the end part of the sheet of laminated glass to be suppressed.

### MEANS FOR SOLVING THE PROBLEMS

According to a broad aspect of the present invention, there is provided an interlayer film for laminated glass having a one-layer structure or a two or more-layer structure, including a polyvinyl acetal resin, a plasticizer, a hindered amine light stabilizer, an oxidation inhibitor having a sulfur atom, and an oxidation inhibitor having a phenol skeleton which is different from the oxidation inhibitor having a sulfur atom.

It is preferred that the oxidation inhibitor having a sulfur atom have an alkyl group with 3 to 16 carbon atoms or have a 2,6-di-t-butylphenol skeleton. It is more preferred that the hindered amine light stabilizer be a hindered amine light stabilizer in which an alkyl group or an alkoxy group is bonded to the nitrogen atom of a piperidine structure.

In a specific aspect of the interlayer film for laminated glass according to the present invention, the interlayer film is an interlayer film for laminated glass having a two or more-layer structure and being provided with a first layer and a second layer arranged on a first surface side of the first layer, the first layer contains the polyvinyl acetal resin and the plasticizer, and the second layer contains the polyvinyl acetal resin and the plasticizer.

In a specific aspect of the interlayer film for laminated glass according to the present invention, the interlayer film is an interlayer film for laminated glass having a three or more-layer structure and being provided with a third layer arranged on a second surface side opposite to the first surface of the first layer, and the third layer contains the polyvinyl acetal resin and the plasticizer.

In a specific aspect of the interlayer film for laminated glass according to the present invention, the hindered amine light stabilizer, the oxidation inhibitor having a sulfur atom and the oxidation inhibitor having a phenol skeleton are contained in the same layer.

In a specific aspect of the interlayer film for laminated glass according to the present invention, the first layer contains the hindered amine light stabilizer, the oxidation inhibitor having a sulfur atom and the oxidation inhibitor having a phenol skeleton.

In a specific aspect of the interlayer film for laminated glass according to the present invention, a layer having a higher glass transition temperature among the first layer and the second layer contains the hindered amine light stabilizer, and in another specific aspect thereof, a layer having a higher glass transition temperature among the first layer and the third layer contains the hindered amine light stabilizer.

In a specific aspect of the interlayer film for laminated glass according to the present invention, the glass transition temperature of the first layer is 30°C or less.

In a specific aspect of the interlayer film for laminated glass according to the present invention, the polyvinyl acetal resin is a polyvinyl butyral resin.

In a specific aspect of the interlayer film for laminated glass according to the present invention, the interlayer film further includes at least one kind of first metal atom selected from the group consisting of an alkali metal, zinc and aluminum.

In a specific aspect of the interlayer film for laminated glass according to the present invention, the content of the first metal atom in the interlayer film is 150 ppm or less.

According to a broad aspect of the present invention, there is provided laminated glass including a first laminated glass member, a second laminated glass member and the interlayer film for laminated glass described above, the interlayer film for laminated glass being arranged between the first laminated glass member and the second laminated glass member.

### EFFECT OF THE INVENTION

Since the interlayer film for laminated glass according to the present invention has a one-layer structure or a two or more-layer structure and the interlayer film includes a polyvinyl acetal resin, a plasticizer, a hindered amine light stabilizer, an oxidation inhibitor having a sulfur atom, and an oxidation inhibitor having a phenol skeleton which is different from the oxidation inhibitor having a sulfur atom, a gap is made difficult to be generated at an end part of the sheet of laminated glass prepared with the interlayer film for laminated glass according to the present invention and an increase in the YI value measured at the end part of the sheet of laminated glass can be suppressed.

### BRIEF DESCRIPTION OF DRAWINGS

Fig. 1 is a partially cut-away sectional view schematically showing an interlayer film for laminated glass in accordance with one embodiment of the present invention.
Fig. 2 is a partially cut-away sectional view schematically showing an interlayer film for laminated glass in accordance with another embodiment of the present invention.
Fig. 3 is a partially cut-away sectional view schematically showing an example of laminated glass prepared with the interlayer film for laminated glass shown in Fig. 1.

### MODE(S) FOR CARRYING OUT THE INVENTION

Hereinafter, the present invention will be described in detail.

### (Interlayer film for laminated glass)

Hereinafter, specific embodiments of the present invention will be described with reference to the drawings.

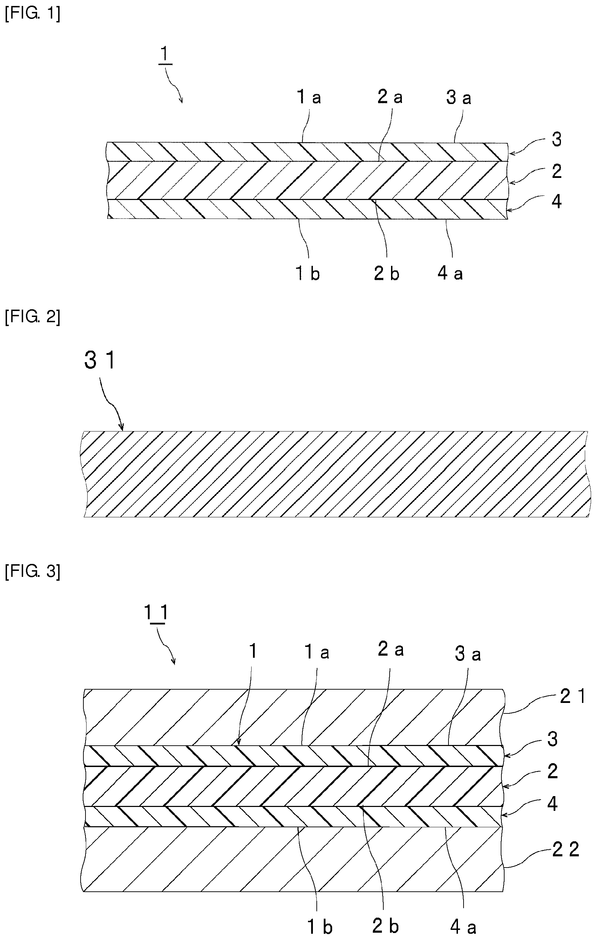

Fig. 1 is a partially cut-away sectional view schematically showing an interlayer film for laminated glass in accordance with one embodiment of the present invention.

An interlayer film 1 shown in Fig. 1 is a multi-layered interlayer film having a two or more-layer structure. The interlayer film 1 is used for obtaining laminated glass. The interlayer film 1 is an interlayer film for laminated glass. The interlayer film 1 is provided with a first layer 2, a second layer 3 arranged on a first surface 2a side of the first layer 2, and a third layer 4 arranged on a second surface 2b side opposite to the first surface 2a of the first layer 2. The second layer 3 is layered on the first surface 2a of the first layer 2. The third layer 4 is layered on the second surface 2b of the first layer 2. The first layer 2 is an intermediate layer. For example, the second layer 3 and the third layer 4 are protective layers and are surface layers in the present embodiment. The first layer 2 is arranged between the second layer 3 and the third layer 4 to be sandwiched therebetween. Accordingly, the interlayer film 1 has a multilayer structure in which the second layer 3, the first layer 2 and the third layer 4 are arranged side by side in this order. In the interlayer film 1, the second layer 3, the first layer 2 and the third layer 4 are layered side by side in this order.

It is preferred that a surface 3a at a side opposite to the first layer 2 side of the second layer 3 be a surface on which a laminated glass member is layered. It is preferred that a surface 4a at a side opposite to the first layer 2 side of the third layer 4 be a surface on which a laminated glass member is layered.

In this connection, additional layers may be arranged between the first layer 2 and the second layer 3 and between the first layer 2 and the third layer 4, respectively. It is preferred that each of the second layer 3 and the third layer 4 be directly layered on the first layer 2. Examples of the additional layer include a layer containing a thermoplastic resin such as a polyvinyl acetal resin or a layer containing polyethylene terephthalate.

With regard to the interlayer film 1, the whole interlayer film 1 includes a polyvinyl acetal resin, a plasticizer, a hindered amine light stabilizer, an oxidation inhibitor having a sulfur atom (first oxidation inhibitor), and an oxidation inhibitor having a phenol skeleton (second oxidation inhibitor) which is different from the oxidation inhibitor having a sulfur atom (hereinafter, sometimes described as "an oxidation inhibitor having a phenol skeleton"). That is, at least one layer among the first layer 2, the second layer 3 and the third layer 4 contains a polyvinyl acetal resin, contains a plasticizer, contains a hindered amine light stabilizer, contains an oxidation inhibitor having a sulfur atom, and contains an oxidation inhibitor having a phenol skeleton. In the interlayer film 1, at least two kinds of oxidation inhibitor are used.

Fig. 2 is a partially cut-away sectional view schematically showing an interlayer film for laminated glass in accordance with another embodiment of the present invention.

An interlayer film 31 shown in Fig. 2 is a single-layered interlayer film having a one-layer structure. The interlayer film 31 is a first layer. The interlayer film 31 is used for obtaining laminated glass. The interlayer film 31 is an interlayer film for laminated glass. The interlayer film 31 includes a polyvinyl acetal resin, a plasticizer, a hindered amine light stabilizer, an oxidation inhibitor having a sulfur atom (first oxidation inhibitor), and an oxidation inhibitor having a phenol skeleton (second oxidation inhibitor) which is different from the oxidation inhibitor having a sulfur atom. In the interlayer film 31, at least two kinds of oxidation inhibitor are used.

Since the interlayer films 1 and 31 each are provided with the above-described configuration, a gap is made difficult to be generated at an end part of the sheet of laminated glass prepared with each of the interlayer films 1, 31 and an increase in the YI value measured at the end part of the sheet of laminated glass can be suppressed. With regard to the interlayer film 1, even when a sheet of laminated glass prepared with the interlayer film 1 is irradiated with light for a long period of time and the sheet of laminated glass is allowed to stand at a high temperature for a long period of time, a gap can be made difficult to be generated at an end part of the sheet of laminated glass. Furthermore, even when the sheet of laminated glass prepared with each of the interlayer films 1 and 31 is allowed to stand at a high temperature for a long period of time, an increase in the YI value can be suppressed. In this connection, the gap is a recess portion formed by the omission of the interlayer film toward the inside thereof at the end part of the sheet of laminated glass. For example, the interlayer film is inwardly retracted, whereby the recess portion is formed.

The interlayer film may be a single-layered interlayer film composed only of the first layer, and may be a multi-layered interlayer film for laminated glass including the first layer. The interlayer film may be an interlayer film provided with at least the first layer and the second layer (this interlayer film is provided or not provided with the third layer). The interlayer film may be provided with the first layer, the second layer and the third layer.

In the interlayer film 1, the second layer 3 and the third layer 4 each are layered on both faces of the first layer 2, respectively. In a multi-layered interlayer film, the second layer needs only to be arranged on the first surface side of the first layer. The second layer is arranged on the first surface side of the first layer, and the third layer does not need to be arranged on the second surface side of the first layer. In this context, the second layer is arranged on the first surface side of the first layer, and it is preferred that the third layer be arranged on the second surface side of the first layer. By arranging the third layer on the second surface side of the first layer, the handling properties of the interlayer film and the penetration resistance of laminated glass are further enhanced. Moreover, a gap is further made difficult to be generated at an end part of the sheet of laminated glass and an increase in the YI value measured at the end part of the sheet of laminated glass can be further suppressed. Furthermore, at the surfaces of both sides of the interlayer film, the adhesivity to a laminated glass member and the like can be adjusted. In this connection, when the third layer is absent, the adhesivity of an outer surface of the second layer of the interlayer film to a laminated glass member can be adjusted.

It is preferred that (Configuration (1)) the interlayer film be provided with only a first layer containing a polyvinyl acetal resin, a plasticizer, a hindered amine light stabilizer, an oxidation inhibitor having a sulfur atom and an oxidation inhibitor having a phenol skeleton, or (Configuration (2)) the interlayer film be provided with a first layer and a second layer arranged on a first surface side of the first layer, the interlayer film being provided or not provided with a third layer arranged on a second surface side opposite to the first surface of the first layer and including a polyvinyl acetal resin, a plasticizer, a hindered amine light stabilizer, an oxidation inhibitor having a sulfur atom and an oxidation inhibitor having a phenol skeleton.

In the foregoing Configuration (2), it is preferred that the hindered amine light stabilizer, the oxidation inhibitor having a sulfur atom and the oxidation inhibitor having a phenol skeleton be contained in the same layer. In the foregoing Configuration (2), it is preferred that the first layer contain the hindered amine light stabilizer, the oxidation inhibitor having a sulfur atom and the oxidation inhibitor having a phenol skeleton.

The foregoing Configuration (2) includes the Configuration (2-1) described below and the Configuration (2-2) described below, and it is preferred that the foregoing Configuration (2) be the Configuration (2-1) described below or the Configuration (2-2) described below. The interlayer film satisfies the requirement for the foregoing Configuration (1), the following Configuration (2-1) or the following Configuration (2-2).

(Configuration (2-1)) The interlayer film is provided with a first layer and a second layer arranged on a first surface side of the first layer and is not provided with a third layer arranged on a second surface side opposite to the first surface of the first layer, the interlayer film including a polyvinyl acetal resin, a plasticizer, a hindered amine light stabilizer, an oxidation inhibitor having a sulfur atom and an oxidation inhibitor having a phenol skeleton. In this case, for example, at least one layer among the first layer and the second layer contains a polyvinyl acetal resin, at least one layer among the first layer and the second layer contains a plasticizer, at least one layer among the first layer and the second layer contains a hindered amine light stabilizer, at least one layer among the first layer and the second layer contains an oxidation inhibitor having a sulfur atom and at least one layer among the first layer and the second layer contains an oxidation inhibitor having a phenol skeleton. Moreover, in this case, the interlayer film has a two or more-layer structure.

(Configuration (2-2)) The interlayer film is provided with a first layer, a second layer arranged on a first surface side of the first layer and a third layer arranged on a second surface side opposite to the first surface of the first layer, the interlayer film including a polyvinyl acetal resin, a plasticizer, a hindered amine light stabilizer, an oxidation inhibitor having a sulfur atom and an oxidation inhibitor having a phenol skeleton. In this case, for example, at least one layer among the first layer, the second layer and the third layer contains a polyvinyl acetal resin, at least one layer among the first layer, the second layer and the third layer contains a plasticizer, at least one layer among the first layer, the second layer and the third layer contains a hindered amine light stabilizer, at least one layer among the first layer, the second layer and the third layer contains an oxidation inhibitor having a sulfur atom and at least one layer among the first layer, the second layer and the third layer contains an oxidation inhibitor having a phenol skeleton. Moreover, in this case, the interlayer film has a three or more-layer structure.

The interlayer film may satisfy the requirement for the foregoing Configuration (1) and may satisfy the requirement for the foregoing Configuration (2). It is preferred that the interlayer film satisfy the requirement for the foregoing Configuration (2). The interlayer film may satisfy the requirement for the foregoing Configuration (2-1) and may satisfy the requirement for the foregoing Configuration (2-2). It is preferred that the interlayer film satisfy the requirement for the foregoing Configuration (2-2).

From the viewpoint of effectively making a gap difficult to be generated at an end part of the sheet of laminated glass and effectively suppressing an increase in the YI value measured at the end part of the sheet of laminated glass, it is preferred that a layer having a higher glass transition temperature contain the hindered amine light stabilizer, it is preferred that a layer having a higher glass transition temperature among the first layer and the second layer contain the hindered amine light stabilizer, and it is preferred that a layer having a higher glass transition temperature among the first layer and the third layer contain the hindered amine light stabilizer. In this connection, when the first layer and the second layer are equal to each other in the glass transition temperature, both of the first layer and the second layer are included in the layer having a higher glass transition temperature. Accordingly, when the first layer and the second layer are equal to each other in the glass transition temperature, it is preferred that at least one among the first layer and the second layer contain the hindered amine light stabilizer. Moreover, when the first layer and the second layer are equal to each other in the glass transition temperature, both of the first layer and the second layer are included in the layer having a higher glass transition temperature. Accordingly, when the first layer and the second layer are equal to each other in the glass transition temperature, it is preferred that at least one among the first layer and the second layer contain the hindered amine light stabilizer.

It is preferred that the interlayer film be provided with the second layer as a surface layer of the interlayer film. It is preferred that the interlayer film be provided with the third layer as a surface layer of the interlayer film.

From the viewpoint of effectively making a gap difficult to be generated at an end part of the sheet of laminated glass and effectively suppressing an increase in the YI value measured at the end part of the sheet of laminated glass, the glass transition temperature of the second layer is preferably higher than the glass transition temperature of the first layer, preferably more than 25°C, more preferably 30°C or more, further preferably 33°C or more and especially preferably 35°C or more. From the viewpoint of effectively making a gap difficult to be generated at an end part of the sheet of laminated glass and effectively suppressing an increase in the YI value measured at the end part of the sheet of laminated glass, the glass transition temperature of the third layer is preferably higher than the glass transition temperature of the first layer, preferably more than 25°C, more preferably 30°C or more, further preferably 33°C or more and especially preferably 35°C or more. The upper limit of the glass transition temperature of each of the second layer and the third layer is not particularly limited. From the viewpoint of further heightening the sound insulating properties of the interlayer film, the glass transition temperature of each of the second layer and the third layer may be 60°C or less.

From the viewpoint of further enhancing the penetration resistance of laminated glass prepared with the interlayer film, it is preferred that the first layer contain a polyvinyl acetal resin and it is preferred that the first layer contain a plasticizer. From the viewpoint of further enhancing the penetration resistance of laminated glass prepared with the interlayer film, it is preferred that the second layer contain a polyvinyl acetal resin and it is preferred that the second layer contain a plasticizer. Moreover, from the viewpoint of further enhancing the penetration resistance of laminated glass prepared with the interlayer film, when the interlayer film is provided with the third layer, it is preferred that the third layer contain a polyvinyl acetal resin and it is preferred that the third layer contain a plasticizer. Moreover, by making the third layer contain a polyvinyl acetal resin and a plasticizer, a gap is further made difficult to be generated at an end part of the sheet of laminated glass and an increase in the YI value measured at the end part of the sheet of laminated glass can be further suppressed.

It is preferred that each of the first layer and the second layer contain a polyvinyl acetal resin and a plasticizer. It is preferred that each of the first layer, the second layer and the third layer contain a polyvinyl acetal resin and a plasticizer. When the first layer does not contain a hindered amine light stabilizer, an oxidation inhibitor having a sulfur atom and an oxidation inhibitor having a phenol skeleton, the second layer may contain a hindered amine light stabilizer, an oxidation inhibitor having a sulfur atom and an oxidation inhibitor having a phenol skeleton, the third layer may contain a hindered amine light stabilizer, an oxidation inhibitor having a sulfur atom and an oxidation inhibitor having a phenol skeleton, and furthermore, both of the second layer and the third layer may contain a hindered amine light stabilizer, an oxidation inhibitor having a sulfur atom and an oxidation inhibitor having a phenol skeleton.

Hereinafter, the details of the first layer (including a single-layered interlayer film), the second layer and the third layer which constitute the interlayer film for laminated glass according to the present invention, and the details of each ingredient contained in the first layer, the second layer and the third layer will be described.

### (Polyvinyl acetal resin)

It is preferred that the first layer (including a single-layered interlayer film) contain a polyvinyl acetal resin (hereinafter, sometimes described as a polyvinyl acetal resin (1)). It is preferred that the second layer contain a polyvinyl acetal resin (hereinafter, sometimes described as a polyvinyl acetal resin (2)). It is preferred that the third layer contain a polyvinyl acetal resin (hereinafter, sometimes described as a polyvinyl acetal resin (3)). The polyvinyl acetal resin (1), the polyvinyl acetal resin (2) and the polyvinyl acetal resin (3) may be the same as or different from one another. One kind of each of the polyvinyl acetal resin (1), the polyvinyl acetal resin (2) and the polyvinyl acetal resin (3) may be used alone, and two or more kinds thereof may be used in combination.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be obtained by saponifying polyvinyl acetate. The saponification degree of the polyvinyl alcohol generally falls within the range of 70 to 99.9% by mole.

The average polymerization degree of the polyvinyl alcohol is preferably 200 or more, more preferably 500 or more, even more preferably 1500 or more, further preferably 1600 or more, especially preferably 2600 or more, most preferably 2700 or more, preferably 5000 or less, more preferably 4000 or less and further preferably 3500 or less. When the average polymerization degree is the above lower limit or more, the penetration resistance of laminated glass is further enhanced. When the average polymerization degree is the above upper limit or less, formation of an interlayer film is facilitated. In particular, when the average polymerization degree of the polyvinyl alcohol is 1500 or more, it is possible to prevent the appearance of a sheet of laminated glass from being deteriorated by poor degassing.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin fall within the range of 3 to 5, and it is preferred that the number of carbon atoms of the acetal group be 3 or 4. When the number of carbon atoms of the acetal group in the polyvinyl acetal resin is 3 or more, the glass transition temperature of the interlayer film is sufficiently lowered.

The aldehyde is not particularly limited. In general, as the aldehyde, an aldehyde with 1 to 10 carbon atoms is suitably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Of these, propionaldehyde, n-butyraldehyde, isobutyraldehyde, n-hexylaldehyde or n-valeraldehyde is preferred, propionaldehyde, n-butyraldehyde or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin (1) is preferably 17% by mole or more, more preferably 20% by mole or more, further preferably 22% by mole or more, preferably 30% by mole or less, more preferably less than 27% by mole and further preferably 25% by mole or less. When the content of the hydroxyl group is the above lower limit or more, the adhesive force of the interlayer film is further heightened. In particular, when the content of the hydroxyl group of the polyvinyl acetal resin (1) is 20% by mole or more, the resin is high in reaction efficiency and is excellent in productivity, and moreover, when less than 27% by mole, the sound insulating properties of laminated glass are further heightened. Moreover, when the content of the hydroxyl group is the above upper limit or less, the flexibility of the interlayer film is enhanced and the handling of the interlayer film is facilitated.

The content of the hydroxyl group of each of the polyvinyl acetal resin (2) and the polyvinyl acetal resin (3) is preferably 25% by mole or more, more preferably 28% by mole or more, preferably 35% by mole or less and more preferably 32% by mole or less. When the content of the hydroxyl group is the above lower limit or more, the adhesive force of the interlayer film is further heightened. Moreover, when the content of the hydroxyl group is the above upper limit or less, the flexibility of the interlayer film is enhanced and the handling of the interlayer film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more, preferably 30% by mole or less, more preferably 25% by mole or less and further preferably 15% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced. In particular, when the acetylation degree of the polyvinyl acetal resin (1) is 0.1% by mole ore more and 25% by mole or less, the resulting laminated glass is excellent in penetration resistance.

The acetylation degree of each of the polyvinyl acetal resin (2) and the polyvinyl acetal resin (3) is preferably 0.01% by mole or more, more preferably 0.5% by mole or more, preferably 10% by mole or less and more preferably 2% by mole or less. When the acetylation degree is the above lower limit or more, the compatibility between the polyvinyl acetal resin and a plasticizer is heightened. When the acetylation degree is the above upper limit or less, with regard to the interlayer film and laminated glass, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be measured in accordance with JIS K6728 "Testing methods for polyvinyl butyral".

The acetalization degree of the polyvinyl acetal resin (1) (the butyralization degree in the case of a polyvinyl butyral resin) is preferably 47% by mole or more, more preferably 60% by mole or more, preferably 80% by mole or less and more preferably 70% by mole or less. When the acetalization degree is the above lower limit or more, the interaction with a second resin component is heightened, the toughness is enhanced and the compatibility between the polyvinyl acetal resin and a plasticizer is heightened. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more, more preferably 67% by mole or more, preferably 75% by mole or less and more preferably 71% by mole or less. When the acetalization degree is the above lower limit or more, the compatibility between the polyvinyl acetal resin and a plasticizer is heightened. When the acetalization degree is the above upper limit or less, the reaction time required for producing the polyvinyl acetal resin is shortened.

The acetalization degree is a mole fraction, represented in percentage, obtained by dividing a value obtained by subtracting the amount of ethylene groups to which the hydroxyl group is bonded and the amount of ethylene groups to which the acetyl group is bonded from the total amount of ethylene groups in the main chain by the total amount of ethylene groups in the main chain.

In this connection, it is preferred that the content of the hydroxyl group (the amount of hydroxyl groups), the acetalization degree (the butyralization degree) and the acetylation degree be calculated from the results measured by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method in accordance with JIS K6728 "Testing methods for polyvinyl butyral".

From the viewpoint of further improving the penetration resistance of laminated glass, it is preferred that the polyvinyl acetal resin (1) be a polyvinyl acetal resin (A) with an acetylation degree (a) of 8% by mole or less and an acetalization degree (a) of 70% by mole or more or a polyvinyl acetal resin (B) with an acetylation degree (b) greater than 8% by mole. The polyvinyl acetal resin (1) may be the polyvinyl acetal resin (A) and may be the polyvinyl acetal resin (B).

The acetylation degree (a) of the polyvinyl acetal resin (A) is 8% by mole or less, preferably 7.5% by mole or less, more preferably 7% by mole or less, further preferably 6.5% by mole or less, especially preferably 5% by mole or less, preferably 0.1% by mole or more, more preferably 0.5% by mole or more, further preferably 0.8% by mole or more and especially preferably 1% by mole or more. When the acetylation degree (a) is the above upper limit or less and the above lower limit or more, the transfer of a plasticizer can be easily controlled and the sound insulating properties of laminated glass are further heightened.

The acetalization degree (a) of the polyvinyl acetal resin (A) is 70% by mole or more, preferably 70.5% by mole or more, more preferably 71% by mole or more, further preferably 71.5% by mole or more, especially preferably 72% by mole or more, preferably 85% by mole or less, more preferably 83% by mole or less, further preferably 81% by mole or less and especially preferably 79% by mole or less. When the acetalization degree (a) is the above lower limit or more, the sound insulating properties of laminated glass are further heightened. When the acetalization degree (a) is the above upper limit or less, the reaction time required for producing the polyvinyl acetal resin (A) can be shortened.

The content (a) of the hydroxyl group of the polyvinyl acetal resin (A) is preferably 18% by mole or more, more preferably 19% by mole or more, further preferably 20% by mole or more, especially preferably 21% by mole or more, preferably 31% by mole or less, more preferably 30% by mole or less, further preferably 29% by mole or less and especially preferably 28% by mole or less. When the content (a) of the hydroxyl group is the above lower limit or more, the adhesive force of the first layer is further heightened. When the content (a) of the hydroxyl group is the above upper limit or less, the sound insulating properties of laminated glass are further heightened.

The acetylation degree (b) of the polyvinyl acetal resin (B) is greater than 8% by mole, preferably 9% by mole or more, more preferably 9.5% by mole or more, further preferably 10% by mole or more, especially preferably 10.5% by mole or more, preferably 30% by mole or less, more preferably 28% by mole or less, further preferably 26% by mole or less and especially preferably 24% by mole or less. When the acetylation degree (b) is the above lower limit or more, the sound insulating properties of laminated glass are further heightened. When the acetylation degree (b) is the above upper limit or less, the reaction time required for producing the polyvinyl acetal resin (B) can be shortened.

The acetalization degree (b) of the polyvinyl acetal resin (B) is preferably 50% by mole or more, more preferably 53% by mole or more, further preferably 55% by mole or more, especially preferably 60% by mole or more, preferably 80% by mole or less, more preferably 78% by mole or less, further preferably 76% by mole or less and especially preferably 74% by mole or less. When the acetalization degree (b) is the above lower limit or more, the sound insulating properties of laminated glass are further heightened. When the acetalization degree (b) is the above upper limit or less, the reaction time required for producing the polyvinyl acetal resin (B) can be shortened.

The content (b) of the hydroxyl group of the polyvinyl acetal resin (B) is preferably 18% by mole or more, more preferably 19% by mole or more, further preferably 20% by mole or more, especially preferably 21% by mole or more, preferably 31% by mole or less, more preferably 30% by mole or less, further preferably 29% by mole or less and especially preferably 28% by mole or less. When the content (b) of the hydroxyl group is the above lower limit or more, the adhesive force of the first layer is further heightened. When the content (b) of the hydroxyl group is the above upper limit or less, the sound insulating properties of laminated glass are further heightened.

It is preferred that each of the polyvinyl acetal resin (A) and the polyvinyl acetal resin (B) be a polyvinyl butyral resin.

### (Plasticizer)

It is preferred that the first layer (including a single-layered interlayer film) contains a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). By using a polyvinyl acetal resin and a plasticizer together, the adhesive force of a layer containing the polyvinyl acetal resin and the plasticizer to a laminated glass member or another layer is moderately heightened. The plasticizer is not particularly limited. The plasticizer (1), the plasticizer (2) and the plasticizer (3) may be the same as or different from one another. One kind of the plasticizer may be used alone, and two or more kinds thereof may be used in combination.

Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Of these, organic ester plasticizers are preferred. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

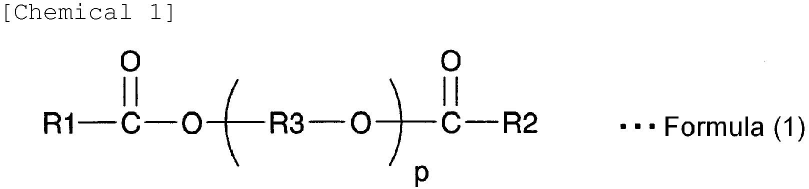

In the foregoing formula (1), R1 and R2 each represent an organic group with 2 to 10 carbon atoms, R3 represents an ethylene group, an isopropylene group or an n-propylene group, and p represents an integer of 3 to 10. It is preferred that R1 and R2 in the foregoing formula (1) each be an organic group with 5 to 10 carbon atoms, and it is more preferred that R1 and R2 each be an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate, it is more preferred that the plasticizer include triethylene glycol di-2-ethylhexanoate or triethylene glycol di-2-ethylbutyrate, and it is further preferred that the plasticizer include triethylene glycol di-2-ethylhexanoate.

The content of the plasticizer (1) (hereinafter, sometimes described as the content (1)) relative to 100 parts by weight of the polyvinyl acetal resin (1) is preferably 40 parts by weight or more, more preferably 55 parts by weight or more, preferably 90 parts by weight or less and more preferably 85 parts by weight or less. When the content (1) is the above lower limit or more, the flexibility of the interlayer film is enhanced and the handling of the interlayer film is facilitated. When the content (1) is the above upper limit or less, the transparency of the interlayer film is further enhanced.

Each of the content of the plasticizer (2) (hereinafter, sometimes described as the content (2)) relative to 100 parts by weight of the polyvinyl acetal resin (2) and the content of the plasticizer (3) (hereinafter, sometimes described as the content (3)) relative to 100 parts by weight of the polyvinyl acetal resin (3) is preferably 30 parts by weight or more, more preferably 35 parts by weight or more, preferably 44 parts by weight or less and more preferably 42 parts by weight or less. When each of the content (2) and the content (3) is the above lower limit or more, the flexibility of the interlayer film is enhanced and the handling of the interlayer film is facilitated. When each of the content (2) and the content (3) is the above upper limit or less, the penetration resistance of laminated glass is further enhanced.

From the viewpoint of further making a gap difficult to be generated at an end part of the sheet of laminated glass, it is preferred that the content (1) be greater than the content (2) and it is preferred that the content (1) be greater than the content (3).

From the viewpoint of further enhancing the penetration resistance of laminated glass, each of the absolute value of the difference between the content (1) and the content (2) and the absolute value of the difference between the content (1) and the content (3) is preferably 10 parts by weight or more and more preferably 20 parts by weight or more. Each of the absolute value of the difference between the content (1) and the content (2) and the absolute value of the difference between the content (1) and the content (3) is preferably 50 parts by weight or less.

### (Hindered amine light stabilizer)

For the purpose of making a gap difficult to be generated at an end part of the sheet of laminated glass and suppressing an increase in the YI value measured at the end part of the sheet of laminated glass, with regard to the interlayer film, the whole interlayer film includes a hindered amine light stabilizer. It is preferred that the first layer contain a hindered amine light stabilizer. It is preferred that the second layer contain a hindered amine light stabilizer. It is preferred that the third layer contain a hindered amine light stabilizer. It is preferred that, among the first layer, the second layer and the third layer, the first layer contain a hindered amine light stabilizer. One kind of the hindered amine light stabilizer may be used alone, and two or more kinds thereof may be used in combination.

Examples of the hindered amine light stabilizer include a hindered amine light stabilizer in which an alkyl group, an alkoxy group or a hydrogen atom is bonded to the nitrogen atom of a piperidine structure, and the like. From the viewpoint of further making a gap difficult to be generated at an end part of the sheet of laminated glass and further suppressing an increase in the YI value measured at the end part of the sheet of laminated glass, a hindered amine light stabilizer in which an alkyl group or an alkoxy group is bonded to the nitrogen atom of a piperidine structure is preferred. It is preferred that the hindered amine light stabilizer be a hindered amine light stabilizer in which an alkyl group is bonded to the nitrogen atom of a piperidine structure, and it is also preferred that the hindered amine light stabilizer be a hindered amine light stabilizer in which an alkoxy group is bonded to the nitrogen atom of a piperidine structure.

Examples of the hindered amine light stabilizer in which an alkyl group is bonded to the nitrogen atom of a piperidine structure include TINUVIN 765, TINUVIN 622SF, ADK STAB LA-52, and the like.

Examples of the hindered amine light stabilizer in which an alkoxy group is bonded to the nitrogen atom of a piperidine structure include TINUVIN XT850FF, TINUVIN XT855FF, ADK STAB LA-81, and the like.

Examples of the hindered amine light stabilizer in which a hydrogen atom is bonded to the nitrogen atom of a piperidine structure include TINUVIN 770DF, Hostavin N24, and the like.

From the viewpoint of further making a gap difficult to be generated at an end part of the sheet of laminated glass and further suppressing an increase in the YI value measured at the end part of the sheet of laminated glass, the molecular weight of the hindered amine light stabilizer is preferably 2000 or less, more preferably 1000 or less and further preferably 700 or less.

In 100% by weight of a layer containing the hindered amine light stabilizer, the content of the hindered amine light stabilizer is preferably 0.01% by weight or more, more preferably 0.05% by weight or more, preferably 0.5% by weight or less and more preferably 0.3% by weight or less. Moreover, in 100% by weight of the first layer, in 100% by weight of the second layer or in 100% by weight of the third layer, the content of the hindered amine light stabilizer is preferably 0.01% by weight or more, more preferably 0.05% by weight or more, preferably 0.5% by weight or less and more preferably 0.3% by weight or less. When the content of the hindered amine light stabilizer is the above lower limit or more and the above upper limit or less, a gap is further made difficult to be generated at an end part of the sheet of laminated glass and an increase in the YI value measured at the end part of the sheet of laminated glass can be further suppressed.

### (Oxidation inhibitor)

It is preferred that the first layer contain an oxidation inhibitor, it is preferred that the first layer contain an oxidation inhibitor having a sulfur atom, and it is preferred that the first layer contain an oxidation inhibitor having a phenol skeleton. It is preferred that the second layer contain an oxidation inhibitor, it is preferred that the second layer contain an oxidation inhibitor having a sulfur atom, and it is preferred that the second layer contain an oxidation inhibitor having a phenol skeleton. It is preferred that the third layer contain an oxidation inhibitor, it is preferred that the third layer contain an oxidation inhibitor having a sulfur atom, and it is preferred that the third layer contain an oxidation inhibitor having a phenol skeleton. For the purpose of making a gap difficult to be generated at an end part of the sheet of laminated glass and suppressing an increase in the YI value measured at the end part of the sheet of laminated glass, with regard to the interlayer film, the whole interlayer film includes an oxidation inhibitor having a sulfur atom and an oxidation inhibitor having a phenol skeleton. From the viewpoint of further making a gap difficult to be generated at an end part of the sheet of laminated glass and suppressing an increase in the YI value measured at the end part of the sheet of laminated glass, with regard to the interlayer film, the whole interlayer film includes an oxidation inhibitor having a phenol skeleton. One kind of the oxidation inhibitor may be used alone, and two or more kinds thereof may be used in combination.

In this connection, the oxidation inhibitor having a phenol skeleton is different from the oxidation inhibitor having a sulfur atom. Accordingly, in the present invention, at least two kinds of oxidation inhibitor are used. When the oxidation inhibitor having a sulfur atom has a phenol skeleton, separately from the oxidation inhibitor having a sulfur atom and a phenol skeleton, an oxidation inhibitor having a phenol skeleton is used. It is preferred that the oxidation inhibitor having a phenol skeleton not have a sulfur atom.

From the viewpoint of further making a gap difficult to be generated at an end part of the sheet of laminated glass and further suppressing an increase in the YI value measured at the end part of the sheet of laminated glass, it is preferred that the first layer contain an oxidation inhibitor having a sulfur atom and an oxidation inhibitor having a phenol skeleton.

Examples of the oxidation inhibitor having a phenol skeleton include 2,6-di-t-butyl-p-cresol (BHT), butylated hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like.

Examples of the oxidation inhibitor having a sulfur atom include dialkylthiodipropionate compounds (kinds of dialkylthiodipropionate) such as 3,3'-thiodipropionic acid didodecyl ester, 4,4'-thiobis(6-tert-butyl-m-cresol), 2,2'-thiodiethyl bis[3-(3,5-di-tert-butyl-4-hydroxyphenyl)propionate], dilauryl thiodipropionate, dimyristyl thiodipropionate and distearyl thiodipropionate; β-alkylmercaptopropionic acid ester compounds (kinds of β-alkylmercaptopropionic acid ester) of polyols such as pentaerythritol tetra(β-dodecylmercaptopropionate); and the like.

From the viewpoint of further making a gap difficult to be generated at an end part of the sheet of laminated glass and further suppressing an increase in the YI value measured at the end part of the sheet of laminated glass, it is preferred that the oxidation inhibitor having a sulfur atom have an alkyl group with 3 to 16 carbon atoms or have a 2,6-di-t-butylphenol skeleton. It is preferred that the oxidation inhibitor having a sulfur atom have an alkyl group with 3 to 16 carbon atoms, and it is also preferred that the oxidation inhibitor having a sulfur atom have a 2,6-di-t-butylphenol skeleton.

From the viewpoint of further suppressing an increase in the YI value measured at the end part of the sheet of laminated glass, the molecular weight of the oxidation inhibitor is preferably 200 or more, more preferably 300 or more, further preferably 500 or more and preferably 1500 or less.

In 100% by weight of a layer containing the oxidation inhibitor, the content of the oxidation inhibitor is preferably 0.1% by weight or more, preferably 2% by weight or less and more preferably 1.8% by weight or less. Moreover, in 100% by weight of the first layer, in 100% by weight of the second layer or in 100% by weight of the third layer, the content of the oxidation inhibitor is preferably 0.1% by weight or more, preferably 2% by weight or less and more preferably 1.8% by weight or less. When the content of the oxidation inhibitor is the above lower limit or more and the above upper limit or less, a gap is further made difficult to be generated at an end part of the sheet of laminated glass and an increase in the YI value measured at the end part of the sheet of laminated glass can be further suppressed.

When the hindered amine light stabilizer, the oxidation inhibitor having a sulfur atom and the oxidation inhibitor having a phenol skeleton are contained in the same layer, in this layer (layer containing a hindered amine light stabilizer, an oxidation inhibitor having a sulfur atom and an oxidation inhibitor having a phenol skeleton), the ratio of the total content of the oxidation inhibitor having a sulfur atom and the oxidation inhibitor having a phenol skeleton to the content of the hindered amine light stabilizer (the content of the hindered amine light stabilizer/the total content of the oxidation inhibitor having a sulfur atom and the oxidation inhibitor having a phenol skeleton) is preferably 0.05 or more, more preferably 0.2 or more, preferably 10 or less and more preferably 5 or less on the basis of the weight.

When the oxidation inhibitor having a sulfur atom and the oxidation inhibitor having a phenol skeleton are contained in the same layer, in this layer (layer containing a hindered amine light stabilizer, an oxidation inhibitor having a sulfur atom and an oxidation inhibitor having a phenol skeleton), the ratio of the content of the oxidation inhibitor having a phenol skeleton to the content of the oxidation inhibitor having a sulfur atom (the content of the oxidation inhibitor having a sulfur atom/the content of the oxidation inhibitor having a phenol skeleton) is preferably 0.05 or more, more preferably 0.2 or more, preferably 100 or less and more preferably 10 or less on the basis of the weight.

### (Metal/Metal salt)

It is preferred that the interlayer film include at least one kind of first metal atom selected from the group consisting of an alkali metal, zinc and aluminum. The interlayer film does not include or includes an alkaline earth metal. It is preferred that the first metal atom and the alkaline earth metal each be contained in the second layer. It is preferred that the first metal atom and the alkaline earth metal each be contained in the third layer. By the use of the first metal atom and the alkaline earth metal, controlling the adhesivity between a laminated glass member and the interlayer film or the adhesivity between respective layers in the interlayer film is facilitated. The first metal atom and the alkaline earth metal each may be in the state of being a metal salt (hereinafter, sometimes described as a Metal salt (M)) to be blended.

It is preferred that the Metal salt (M) contain at least one kind of metal selected from the group consisting of Li, Na, K, Rb, Cs, Mg, Ca, Sr and Ba. It is preferred that the interlayer film include at least one kind of metal among K and Mg.

Moreover, it is more preferred that the Metal salt (M) be an alkali metal salt of an organic acid with 2 to 16 carbon atoms or an alkaline earth metal salt of an organic acid with 2 to 16 carbon atoms, and it is further preferred that the Metal salt (M) be a magnesium carboxylate with 2 to 16 carbon atoms or a potassium carboxylate with 2 to 16 carbon atoms.

Although the magnesium carboxylate with 2 to 16 carbon atoms and the potassium carboxylate with 2 to 16 carbon atoms are not particularly limited, examples thereof include magnesium acetate, potassium acetate, magnesium propionate, potassium propionate, magnesium 2-ethylbutanoate, potassium 2-ethylbutanoate, magnesium 2-ethylhexanoate, potassium 2-ethylhexanoate, and the like.

When the interlayer film includes the first metal atom, each of the content of the first metal atom in the interlayer film, the content of an alkali metal in the first layer, the content of the first metal atom in the second layer and the content of the first metal atom in the third layer is preferably 5 ppm or more, more preferably 10 ppm or more, further preferably 20 ppm or more, preferably 300 ppm or less, more preferably 250 ppm or less, further preferably 200 ppm or less and especially preferably 150 ppm or less. When the content of the first metal atom is the above lower limit or more and the above upper limit or less, the adhesivity between a laminated glass member and the interlayer film or the adhesivity between respective layers in the interlayer film can be further well controlled, and an increase in the YI value measured at the end part of the sheet of laminated glass is further suppressed.

When the interlayer film includes an alkaline earth metal, each of the content of the alkaline earth metal in the interlayer film, the content of the alkaline earth metal in the first layer, the content of the alkaline earth metal in the second layer and the content of the alkaline earth metal in the third layer is preferably 5 ppm or more, more preferably 10 ppm or more, further preferably 20 ppm or more, preferably 300 ppm or less, more preferably 250 ppm or less, further preferably 200 ppm or less and especially preferably 150 ppm or less. When the content of the alkaline earth metal is the above lower limit or more and the above upper limit or less, the adhesivity between a laminated glass member and the interlayer film or the adhesivity between respective layers in the interlayer film can be further well controlled, and an increase in the YI value measured at the end part of the sheet of laminated glass is further suppressed.

### (Other ingredients)

Each of the first layer, the second layer and the third layer may contain additives such as an ultraviolet ray screening agent, a flame retardant, an antistatic agent, a pigment, a dye, an adhesive force regulating agent, a moisture-resistance improving agent, a fluorescent brightening agent and an infrared ray absorber, as necessary. One kind of these additives may be used alone, and two or more kinds thereof may be used in combination.

### (Other details of interlayer film for laminated glass)

In the case of being an interlayer film for laminated glass having a two or more-layer structure or a three or more-layer structure, from the viewpoint of further improving the sound insulating performance of laminated glass, the glass transition temperature of the first layer is preferably 30°C or less and more preferably 20°C or less. The glass transition temperature of the first layer is preferably -15°C or more.

The thickness of the interlayer film for laminated glass according to the present invention is not particularly limited. From the viewpoint of the practical aspect and the viewpoint of sufficiently heightening the heat shielding properties, the thickness of the interlayer film is preferably 0.1 mm or more, more preferably 0.25 mm or more, preferably 3 mm or less and more preferably 1.5 mm or less. When the thickness of the interlayer film is the above lower limit or more, the penetration resistance of laminated glass is enhanced. When the thickness of the interlayer film is the above upper limit or less, the transparency of the interlayer film is further improved.

The thickness of the interlayer film is defined as T. In the case of a multi-layered interlayer film, from the viewpoint of further making a gap difficult to be generated at an end part of the sheet of laminated glass and further suppressing an increase in the YI value measured at the end part of the sheet of laminated glass, the thickness of the first layer is preferably 0.0625T or more, more preferably 0.1T or more, preferably 0.375T or less and more preferably 0.25T or less.

From the viewpoint of further making a gap difficult to be generated at an end part of the sheet of laminated glass and further suppressing an increase in the YI value measured at the end part of the sheet of laminated glass, the thickness of each of the second layer and the third layer is preferably 0.625T or more, more preferably 0.75T or more, preferably 0.9375T or less and more preferably 0.9T or less. Moreover, when the thickness of each of the second layer and the third layer is the above lower limit or more and the above upper limit or less, the bleed-out of the plasticizer can be suppressed.

From the viewpoint of further making a gap difficult to be generated at an end part of the sheet of laminated glass and further suppressing an increase in the YI value measured at the end part of the sheet of laminated glass, when the interlayer film is provided with the second layer and the third layer, the total thickness of the second layer and the third layer is preferably 0.625T or more, more preferably 0.75T or more, preferably 0.9375T or less and more preferably 0.9T or less. Moreover, when the total thickness of the second layer and the third layer is the above lower limit or more and the above upper limit or less, the bleed-out of the plasticizer can be suppressed.

The production method of the interlayer film for laminated glass according to the present invention is not particularly limited. In the case of a single-layered interlayer film, examples of the production method of the interlayer film for laminated glass according to the present invention include a method of extruding a resin composition with an extruder. In the case of a multi-layered interlayer film, examples of the production method of the interlayer film for laminated glass according to the present invention include a method of separately forming respective resin compositions used for constituting respective layers into respective layers, and then, for example, layering the respective obtained layers, a method of coextruding respective resin compositions used for constituting respective layers with an extruder and layering the respective layers. A production method of extrusion-molding is preferred because the method is suitable for continuous production.

Since the production efficiency of the interlayer film is excellent, it is preferred that respective polyvinyl acetal resins contained in the second layer and the third layer be the same as each other, it is more preferred that respective polyvinyl acetal resins contained in the second layer and the third layer be the same as each other and respective plasticizers contained therein be the same as each other, and it is further preferred that the second layer and the third layer be formed from the same resin composition as each other.

### (Laminated glass)

Fig. 3 is a partially cut-away sectional view schematically showing an example of laminated glass prepared with the interlayer film for laminated glass shown in Fig. 1.

The laminated glass 11 shown in Fig. 3 is provided with a first laminated glass member 21, a second laminated glass member 22 and an interlayer film 1. The interlayer film 1 is arranged between the first laminated glass member 21 and the second laminated glass member 22 to be sandwiched therebetween.

The first laminated glass member 21 is layered on a first surface 1a of the interlayer film 1. The second laminated glass member 22 is layered on a second surface 1b opposite to the first surface 1a of the interlayer film 1. The first laminated glass member 21 is layered on an outer surface 3a of a second layer 3 of the interlayer film 1. The second laminated glass member 22 is layered on an outer surface 4a of a third layer 4 of the interlayer film 1.

As described above, the laminated glass according to the present invention is provided with a first laminated glass member, a second laminated glass member and an interlayer film arranged between the first laminated glass member and the second laminated glass member, and the interlayer film is the interlayer film for laminated glass according to the present invention.

Examples of the laminated glass member include a glass plate, a PET (polyethylene terephthalate) film, and the like. As the laminated glass, laminated glass in which an interlayer film is sandwiched between a glass plate and a PET film or the like, as well as laminated glass in which an interlayer film is sandwiched between two glass plates, is included. The laminated glass is a laminate provided with a glass plate, and it is preferred that at least one glass plate be used.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, net-reinforced plate glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the laminated glass member is preferably 1 mm or more, preferably 5 mm or less and more preferably 3 mm or less. Moreover, when the laminated glass member is a glass plate, the thickness of the glass plate is preferably 1 mm or more, preferably 5 mm or less and more preferably 3 mm or less. When the laminated glass member is a PET film, the thickness of the PET film is preferably 0.03 mm or more and preferably 0.5 mm or less.

The method for producing the laminated glass is not particularly limited. For example, an interlayer film is sandwiched between the first laminated glass member and the second laminated glass member, and the air remaining between each of the first laminated glass member and the second laminated glass member and the interlayer film is removed by making the members to pass through a pressing roll or by putting the members into a rubber bag and sucking the contents under reduced pressure. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass can be obtained.

Each of the interlayer film and the laminated glass can be used for automobiles, railway vehicles, aircraft, ships, buildings and the like. Each of the interlayer film and the laminated glass can also be used for applications other than these applications. It is preferred that the interlayer film and the laminated glass be an interlayer film and laminated glass for vehicles or for building, and it is more preferred that the interlayer film and the laminated glass be an interlayer film and laminated glass for vehicles. Each of the interlayer film and the laminated glass can be used for a windshield, side glass, rear glass or roof glass of an automobile, and the like. The interlayer film and the laminated glass are suitably used for automobiles. The interlayer film is used for obtaining laminated glass of an automobile.

Hereinafter, the present invention will be described in more detail with reference to examples.

With regard to the polyvinyl butyral (PVB) resin used in the following examples and comparative examples, the butyralization degree (the acetalization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

Moreover, the following hindered amine light stabilizers were used in examples and comparative examples.
TINUVIN 765 (available from BASF Japan Ltd., N-C (alkyl group) type, the molecular weight of 509)
TINUVIN XT850FF (available from BASF Japan Ltd., N-OR (alkoxy group) type, the molecular weight of 1000 or more)
TINUVIN 770DF (available from BASF Japan Ltd., N-H (hydrogen atom) type, the molecular weight of 481)

Moreover, the following oxidation inhibitors were used in examples and comparative examples.
BHT (2,6-di-t-butyl-p-cresol, the molecular weight of 220)
ADK STAB AO-40 (available from ADEKA CORPORATION, an oxidation inhibitor having a phenol skeleton, the molecular weight of 383)
IRGANOX 1076 (available from BASF Japan Ltd., an oxidation inhibitor having a phenol skeleton, the molecular weight of 531)
IRGANOX 1010 (available from BASF Japan Ltd., an oxidation inhibitor having a phenol skeleton, the molecular weight of 1178)
IRGANOX PS800FL (available from BASF Japan Ltd., an oxidation inhibitor having a sulfur atom, the molecular weight of 514)
Sumilizer WX-R (available from Sumitomo Chemical Industry Company Limited, an oxidation inhibitor having a sulfur atom, the molecular weight of 359)
IRGANOX 1035 (available from BASF Japan Ltd., an oxidation inhibitor having a sulfur atom, the molecular weight of 643)
IRGASTAB FS 042 (available from BASF Japan Ltd., an additional oxidation inhibitor, the molecular weight of 538)
IRGANOX E201 (available from BASF Japan Ltd., a further additional oxidation inhibitor, the molecular weight of 431)

### (Example 1)

### Preparation of Composition X for forming interlayer film (first layer):

One hundred parts by weight of a polyvinyl acetal resin (a polyvinyl butyral (PVB) resin, the average polymerization degree of the polyvinyl alcohol (PVA) of 1700, the content of the hydroxyl group of 30% by mole, the acetylation degree of 1% by mole, the acetalization degree of 69% by mole), 40 parts by weight of triethylene glycol di-2-ethylhexanoate (3GO), which is a plasticizer, 0.2 parts by weight of TINUVIN 765 (available from BASF Japan Ltd., N-C (alkyl group) type, the molecular weight of 509), 0.2 parts by weight of IRGANOX PS800FL (available from BASF Japan Ltd., an oxidation inhibitor having a sulfur atom, the molecular weight of 514), 0.2 parts by weight of BHT (2,6-di-t-butyl-p-cresol, the molecular weight of 220) and a magnesium-containing compound in an amount that the content thereof in the interlayer film becomes 100 ppm were mixed to obtain a Composition X for forming an interlayer film.

### Preparation of interlayer film:

By extruding a composition for forming an interlayer film with an extruder, a single-layered interlayer film (800 µm in thickness) was prepared.

### Preparation of laminated glass:

The interlayer film (single-layer) obtained was cut into a size of 8 cm in longitudinal length × 8 cm in transversal length. Next, the interlayer film was sandwiched between two sheets of clear glass (8 cm in longitudinal length × 8 cm in transversal length × 2.5 mm in thickness), held in place for 30 minutes at 90°C and pressed under vacuum with a vacuum laminator to obtain a laminate. With regard to the laminate, interlayer film portions protruding from the sheet of glass were cut away to obtain a sheet of laminated glass.

### (Examples 2 to 14 and Comparative Examples 1 to 4)

An interlayer film and a sheet of laminated glass were prepared in the same manner as that in Example 1 except that the kind of the ingredients contained in the interlayer film and the content of the ingredients were set to those listed in the following Tables 1 and 2.

### (Example 15)

### Preparation of Composition X for forming first layer:

One hundred parts by weight of a polyvinyl acetal resin (a polyvinyl butyral (PVB) resin, the average polymerization degree of the polyvinyl alcohol (PVA) of 2300, the content of the hydroxyl group of 23% by mole, the acetylation degree of 12.5% by mole, the acetalization degree of 64.5% by mole), 60 parts by weight of triethylene glycol di-2-ethylhexanoate (3GO), which is a plasticizer, 0.2 parts by weight of TINUVIN 765 (available from BASF Japan Ltd., N-C (alkyl group) type, the molecular weight of 509), 0.2 parts by weight of IRGANOX PS800FL (available from BASF Japan Ltd., an oxidation inhibitor having a sulfur atom, the molecular weight of 514) and 0.2 parts by weight of BHT (2,6-di-t-butyl-p-cresol, the molecular weight of 220) were mixed to obtain a Composition X for forming a first layer.

### Preparation of Composition Y for forming second layer and third layer:

One hundred parts by weight of a polyvinyl acetal (PVA) resin (a polyvinyl butyral (PVB) resin, the average polymerization degree of the polyvinyl alcohol (PVA) of 1700, the content of the hydroxyl group of 30% by mole, the acetylation degree of 1% by mole, the acetalization degree of 69% by mole), 40 parts by weight of triethylene glycol di-2-ethylhexanoate (3GO), which is a plasticizer, and a magnesium-containing compound in an amount that the content thereof in the interlayer film becomes 60 ppm were mixed to obtain a Composition Y for forming a second layer and a third layer.

### Preparation of interlayer film:

The Composition X for forming a first layer and the Composition Y for forming a second layer and a third layer were coextruded with a coextruder to prepare an interlayer film (800 µm in thickness) having a layered structure with a stack of a second layer (350 µm in thickness)/a first layer (100 µm in thickness)/a third layer (350 µm in thickness).

### Preparation of laminated glass:

A sheet of laminated glass was prepared in the same manner as that in Example 1 except that the obtained interlayer film was used.

### (Examples 16 to 29 and Comparative Examples 5 to 11)

An interlayer film and a sheet of laminated glass were prepared in the same manner as that in Example 15 except that the kind of the ingredients contained in the first layer, the second layer and the third layer and the content of the ingredients were set to those listed in the following Tables 3 and 4.

### (Evaluation)

### (1) Glass transition temperature of interlayer film (first layer, single-layered interlayer film) or first layer (multi-layered interlayer film)

A kneaded product having a composition of each of first layers in examples and comparative examples was prepared. The kneaded product obtained was press-molded with a press molding machine to obtain a Resin film A with an average thickness of 0.35 mm. The Resin film A obtained was allowed to stand for 2 hours under the condition of 25°C and a relative humidity of 30%. After allowed to stand for 2 hours, the viscoelasticity thereof was measured by means of the "ARES-G2" available from TA Instruments Japan Inc. As a jig, a parallel plate with a diameter of 8 mm was used. The measurement was performed under the condition in which the temperature is decreased from 100°C to -10°C at a temperature decreasing rate of 3°C/minute and under the condition of a frequency of 1 Hz and a strain of 1%. In the measurement results obtained, the peak temperature of the loss tangent was defined as the glass transition temperature Tg (°C).

### (2) Glass transition temperature of second layer and third layer (multi-layered interlayer film)

A kneaded product having a composition of each of a second layer and a third layer in examples and comparative examples was prepared. The kneaded product obtained was press-molded with a press molding machine to obtain a Resin film A with an average thickness of 0.35 mm. The Resin film A obtained was allowed to stand for 2 hours under the condition of 25°C and a relative humidity of 30%. After allowed to stand for 2 hours, the viscoelasticity thereof was measured by means of the "ARES-G2" available from TA Instruments Japan Inc. As a jig, a parallel plate with a diameter of 8 mm was used. The measurement was performed under the condition in which the temperature is decreased from 100°C to -10°C at a temperature decreasing rate of 3°C/minute and under the condition of a frequency of 1 Hz and a strain of 1%. In the measurement results obtained, the peak temperature of the loss tangent was defined as the glass transition temperature Tg (°C).

### (3) State of gap generated at end part of sheet of laminated glass

A sheet of laminated glass was irradiated with ultraviolet rays (quartz glass mercury lamp (750 W)) for 2000 hours in accordance with JIS R3205 using an ultraviolet-ray irradiation device ("HLG-2S" available from Suga Test Instruments Co., Ltd.). After the test, the end part of the sheet of laminated glass was observed to evaluate the state of a gap generated at the end part of the sheet of laminated glass. The state of the gap was judged according to the following criteria.

### [Criteria for judgment in state of gap]

○: At the end part of the sheet of laminated glass, there is no gap or the gap is generated only within a distance of 1 mm or less from the end part in the inwardly facing direction orthogonal to the end side including the end part.
×: At the end part of the sheet of laminated glass, the gap extends by a distance of more than 1 mm from the end part in the inwardly facing direction orthogonal to the end side including the end part.

### (4) ΔYI value measured at end part of sheet of laminated glass

The sheet of laminated glass obtained was measured for the YI value (the yellowness index, the yellow index) by a transmission method in accordance with JIS K7105 using a spectrophotometer ("U-4100" available from Hitachi High-Technologies Corporation).

The end part of the sheet of laminated glass was measured for the initial YI value. Next, the sheet of laminated glass was heated for 4 weeks at 100°C. After the heating, the end part of the sheet of laminated glass was measured for the YI value after heating. In this connection, the measurement area of the YI value was defined as an area within a distance of 5 mm from the end part in the inwardly facing direction orthogonal to the end side including the end part. The absolute value of the difference between the initial YI value and the YI value after heating was defined as the ΔYI to be determined. The ΔYI value was judged according to the following criteria.

### [Criteria for judgment in ΔYI value]

○: The ΔYI value is 4 or less.
×: The ΔYI value is more than 4.

### (5) Sound insulating properties

A sheet of laminated glass was excited by means of a vibration generator for a damping test ("Vibration exciter G21-005D" available from SHINKEN CO., LTD.) to obtain vibration characteristics, the vibration characteristics were amplified by a mechanical impedance measuring apparatus ("XG-81" available from RION Co., Ltd.), and the vibration spectrum was analyzed by an FFT spectrum analyzer ("FFT analyzer HP3582A" available from Yokogawa-Hewlett-Packard Company).

The results are shown in the following Tables 1 to 4. In this connection, the content of the polyvinyl acetal resin is 100 parts by weight. With regard to the evaluation for sound insulating properties, all the sheets of laminated glass in Examples 1 to 29 were determined to be excellent in sound insulating properties.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Interlayer film (first layer) | Polyvinyl acetal resin | Acetalization degree (mol%) | 69 | 64.5 | 64.5 | 72 | 69 | 69 | 69 | 69 | 69 |
| | | Content of hydroxyl group (mol%) | 30 | 34.5 | 34.5 | 27 | 30 | 30 | 30 | 30 | 30 |
| | | Acetylation degree (mol%) | 1 | 1 | 1 | 1 | 1 | 1 | 1 | 1 | 1 |
| | Plasticizer | Kind | 3GO | 3GO | 3GO | 3GO | 3GO | 3GO | 3GO | 3GO | 3GO |
| | | Content (parts by weight) | 40 | 20 | 30 | 40 | 40 | 40 | 40 | 40 | 40 |
| | Hindered amine light stabilizer | Kind | N-C TYPE | N-C TYPE | N-C TYPE | N-C TYPE | N-C TYPE | N-OR TYPE | N-OR TYPE | N-OR TYPE | N-OR TYPE |
| | | | TINUVIN 765 | TINUVIN 765 | TINUVIN 765 | TINUVIN 765 | TINUVIN 765 | TINUVIN XT850FF | TINUVIN XT850FF | TINUVIN XT850FF | TINUVIN XT850FF |
| | | Content (parts by weight) | 0.2 | 0.2 | 0.2 | 0.2 | 0.2 | 0.2 | 0.2 | 0.2 | 0.04 |
| | Oxidation inhibitor (sulfur atom) | Kind | IRGANOX PS800FL | IRGANOX PS800FL | IRGANOX PS800FL | IRGANOX PS800FL | IRGANOX PS800FL | IRGANOX PS800FL | IRGANOX PS800FL | IRGANOX PS800FL | IRGANOX PS800FL |
| | | Content (parts by weight) | 0.2 | 0.2 | 0.2 | 0.2 | 0.2 | 0.04 | 0.2 | 0.2 | 0.2 |
| | Oxidation inhibitor (phenol skeleton) | Kind | BHT | BHT | BHT | BHT | BHT | BHT | BHT | BHT | BHT |
| | | Content (parts by weight) | 0.2 | 0.2 | 0.2 | 0.2 | 0.02 | 0.2 | 0.2 | 0.02 | 0.2 |
| | Oxidation inhibitor (additional one) | Kind | - | - | - | - | - | - | | - | - |
| | | Content (parts by weight) | - | - | - | - | - | - | - | - | - |
| Content (ppm) of Mg in interlayer film | | | 100 | 100 | 100 | 100 | 100 | 100 | 100 | 100 | 100 |
| (1) Glass transition temperature (°C) of first layer | | | 27°C | 44°C | 40°C | 25°C | 27°C | 27°C | 27°C | 27°C | 27°C |
| (3) State of gap | | | ○ | ○ | ○ | ○ | ○ | ○ | ○ | ○ | ○ |
| (4) ΔYI value | | Measured value | 0.8 | 0.7 | 0.7 | 1.5 | 0.6 | 1.4 | 1.8 | 1.4 | 1.2 |
| | | Judgment | ○ | ○ | ○ | ○ | ○ | ○ | ○ | ○ | ○ |

**[Table 2]**

| | | | Example 10 | Example 11 | Example 12 | Example 13 | Example 14 | Comparative Example 1 | Comparative Example 2 | Comparative Example 3 | Comparative Example 4 |
|---|---|---|---|---|---|---|---|---|---|---|---|
| Interlayer film (first layer) | Polyvinyl acetal resin | Acetalization degree (mol%) | 69 | 69 | 69 | 69 | 69 | 69 | 69 | 69 | 69 |
| | | Content of hydroxyl group (mol%) | 30 | 30 | 30 | 30 | 30 | 30 | 30 | 30 | 30 |
| | | Acetylation degree (mol%) | 1 | 1 | 1 | 1 | 1 | 1 | 1 | 1 | 1 |
| | Plasticizer | Kind | 3GO | 3GO | 3GO | 3GO | 3GO | 3GO | 3GO | 3GO | 3GO |
| | | Content (parts by weight) | 40 | 40 | 40 | 40 | 40 | 40 | 40 | 40 | 40 |
| | Hindered amine light stabilizer | Kind | N-OR TYPE | N-OR TYPE | N-OR TYPE | N-C TYPE | N-C TYPE | N-H TYPE | N-C TYPE | N-C TYPE | N-C TYPE |
| | | | TINUVIN XT850FF | TINUVIN XT850FF | TINUVIN XT850FF | TINUVIN 765 | TINUVIN 765 | TINUVIN 770DF | TINUVIN 765 | TINUVIN 765 | TINUVIN 765 |
| | | Content (parts by weight) | 0.2 | 0.2 | 0.2 | 0.2 | 0.2 | 0.2 | 0.2 | 0.2 | 0.2 |
| | Oxidation inhibitor (sulfur atom) | Kind | IRGANOX PS800FL | IRGANOX PS800FL | IRGANOX PS800FL | Sumilizer WX-R | IRGANOX 1035 | - | - | - | - |
| | | Content (parts by weight) | 0.2 | 0.2 | 0.2 | 0.2 | 0.2 | - | - | - | - |
| | Oxidation inhibitor (phenol skeleton) | Kind | ADK STAB AO-40 | IRGANOX 1076 | IRGANOX 1010 | BHT | BHT | BHT | BHT | BHT | BHT |
| | | Content (parts by weight) | 0.2 | 0.2 | 0.2 | 0.2 | 0.2 | 0.2 | 0.2 | 0.2 | 0.2 |
| | Oxidation inhibitor (additional one) | Kind | - | - | - | - | - | - | - | IRGASTAB FS 042 | IRGANOX E 201 |
| | | Content (parts by weight) | - | - | | - | - | - | - | 0.2 | 0.2 |
| Content (ppm) of Mg in interlayer film | | | 100 | 100 | 100 | 100 | 100 | 100 | 100 | 100 | 100 |
| (1) Glass transition temperature (°C) of first layer | | | 27°C | 27°C | 27°C | 27°C | 27°C | 27°C | 27°C | 27°C | 27°C |
| (3) State of gap | | | ○ | ○ | ○ | ○ | ○ | ○ | ○ | ○ | ○ |
| (4) ΔYI value | | Measured value | 1.2 | 1.1 | 1 | 2 | 2 | 65 | 4.1 | 25 | 69 |
| | | Judgment | ○ | ○ | ○ | ○ | ○ | × | × | × | × |

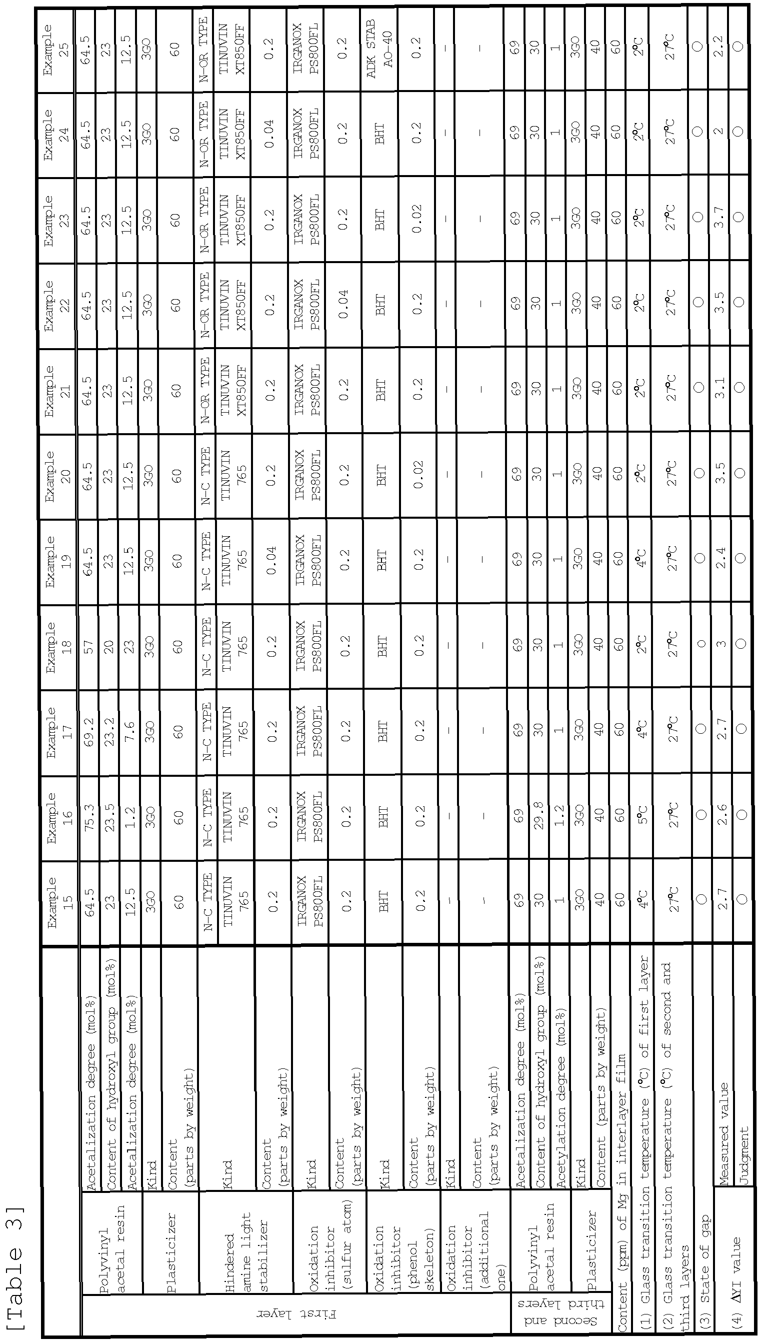

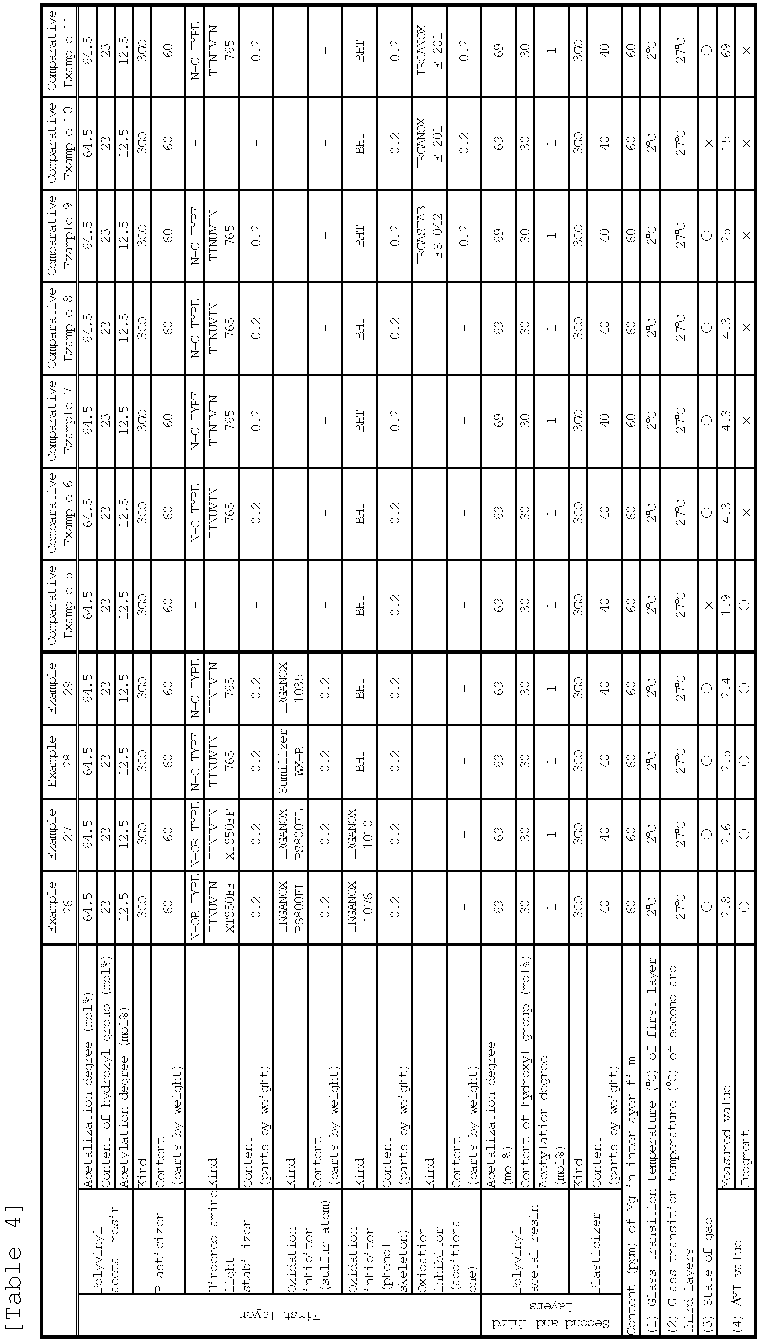

### EXPLANATION OF SYMBOLS

- 1:: Interlayer film
- 1a:: First surface
- 1b:: Second surface
- 2:: First layer
- 2a:: First surface
- 2b:: Second surface
- 3:: Second layer
- 3a:: Outer surface
- 4:: Third layer
- 4a:: Outer surface
- 11:: Laminated glass
- 21:: First laminated glass member
- 22:: Second laminated glass member
- 31:: Interlayer film

## Claims

1. An interlayer film for laminated glass having a one-layer structure or a two or more-layer structure, comprising
a polyvinyl acetal resin, a plasticizer, a hindered amine light stabilizer, an oxidation inhibitor having a sulfur atom, and an oxidation inhibitor having a phenol skeleton which is different from the oxidation inhibitor having a sulfur atom.

2. The interlayer film for laminated glass according to claim 1, wherein the oxidation inhibitor having a sulfur atom has an alkyl group with 3 to 16 carbon atoms or has a 2,6-di-t-butylphenol skeleton.

3. The interlayer film for laminated glass according to claim 1 or 2, wherein the hindered amine light stabilizer is a hindered amine light stabilizer in which an alkyl group or an alkoxy group is bonded to the nitrogen atom of a piperidine structure.

4. The interlayer film for laminated glass according to any one of claims 1 to 3, having a two or more-layer structure and being provided with a first layer and a second layer arranged on a first surface side of the first layer,
wherein the first layer contains the polyvinyl acetal resin and the plasticizer, and
the second layer contains the polyvinyl acetal resin and the plasticizer.

5. The interlayer film for laminated glass according to claim 4, having a three or more-layer structure and being provided with a third layer arranged on a second surface side opposite to the first surface of the first layer,
wherein the third layer contains the polyvinyl acetal resin and the plasticizer.

6. The interlayer film for laminated glass according to claim 4 or 5, wherein the hindered amine light stabilizer, the oxidation inhibitor having a sulfur atom and the oxidation inhibitor having a phenol skeleton are contained in the same layer.

7. The interlayer film for laminated glass according to any one of claims 4 to 6, wherein the first layer contains the hindered amine light stabilizer, the oxidation inhibitor having a sulfur atom and the oxidation inhibitor having a phenol skeleton.

8. The interlayer film for laminated glass according to any one of claims 4 to 7, wherein a layer having a higher glass transition temperature among the first layer and the second layer contains the hindered amine light stabilizer.

9. The interlayer film for laminated glass according to any one of claims 4 to 8, being provided with a third layer arranged on a second surface side opposite to the first surface of the first layer,
wherein a layer having a higher glass transition temperature among the first layer and the third layer contains the hindered amine light stabilizer.

10. The interlayer film for laminated glass according to any one of claims 4 to 9, wherein the glass transition temperature of the first layer is 30°C or less.

11. The interlayer film for laminated glass according to any one of claims 1 to 10, wherein the polyvinyl acetal resin is a polyvinyl butyral resin.

12. The interlayer film for laminated glass according to any one of claims 1 to 11, further comprising at least one kind of first metal atom selected from the group consisting of an alkali metal, zinc and aluminum.

13. The interlayer film for laminated glass according to claim 12, wherein the content of the first metal atom in the interlayer film is 150 ppm or less.

14. Laminated glass, comprising:
a first laminated glass member;
a second laminated glass member; and
the interlayer film for laminated glass according to any one of claims 1 to 13,
the interlayer film for laminated glass being arranged between the first laminated glass member and the second laminated glass member.

## Patentansprüche

1. Zwischenschichtfilm für Verbundglas mit einer einschichtigen Struktur oder einer zwei- oder mehrschichtigen Struktur, umfassend:
ein Polyvinylacetalharz, einen Weichmacher, einen gehinderten Amin-Lichtstabilisator, einen Oxidationsinhibitor mit einem Schwefelatom und einen Oxidationsinhibitor mit einem Phenol-Gerüst, der von dem Oxidationsinhibitor mit einem Schwefelatom verschieden ist.

2. Zwischenschichtfilm für Verbundglas nach Anspruch 1, wobei der Oxidationsinhibitor mit einem Schwefelatom eine Alkylgruppe mit 3 bis 16 Kohlenstoffatomen aufweist oder ein 2,6-Di-t-butylphenol-Gerüst aufweist.

3. Zwischenschichtfilm für Verbundglas nach Anspruch 1 oder 2, wobei der gehinderte Amin-Lichtstabilisator ein gehinderter Amin-Lichtstabilisator ist, bei dem eine Alkylgruppe oder eine Alkoxygruppe an das Stickstoffatom einer Piperidin-Struktur gebunden ist.

4. Zwischenschichtfilm für Verbundglas nach einem der Ansprüche 1 bis 3, mit einer zwei- oder mehrschichtigen Struktur, und versehen mit einer ersten Schicht und einer zweiten Schicht, die auf einer ersten Flächenseite der ersten Schicht angeordnet ist,
wobei die erste Schicht das Polyvinylacetalharz und den Weichmacher enthält, und
die zweite Schicht das Polyvinylacetalharz und den Weichmacher enthält.

5. Zwischenschichtfilm für Verbundglas nach Anspruch 4, mit einer drei- oder mehrschichtigen Struktur, und versehen mit einer dritten Schicht, die auf einer zweiten Flächenseite gegenüber der ersten Fläche der ersten Schicht angeordnet ist,
wobei die dritte Schicht das Polyvinylacetalharz und den Weichmacher enthält.

6. Zwischenschichtfilm für Verbundglas nach Anspruch 4 oder 5, wobei der gehinderte Amin-Lichtstabilisator, der Oxidationsinhibitor mit einem Schwefelatom und der Oxidationsinhibitor mit einem Phenol-Gerüst in derselben Schicht enthalten sind.

7. Zwischenschichtfilm für Verbundglas nach einem der Ansprüche 4 bis 6, wobei die erste Schicht den gehinderten Amin-Lichtstabilisator, den Oxidationsinhibitor mit einem Schwefelatom und den Oxidationsinhibitor mit einem Phenol-Gerüst enthält.

8. Zwischenschichtfilm für Verbundglas nach einem der Ansprüche 4 bis 7, wobei eine Schicht mit einer höheren Glasübergangstemperatur von der ersten Schicht und der zweiten Schicht den gehinderten Amin-Lichtstabilisator enthält.

9. Zwischenschichtfilm für Verbundglas nach einem der Ansprüche 4 bis 8, versehen mit einer dritten Schicht, die auf einer zweiten Flächenschicht gegenüber der ersten Fläche der ersten Schicht angeordnet ist,
wobei eine Schicht mit einer höheren Glasübergangstemperatur von der ersten Schicht und der dritten Schicht den gehinderten Amin-Lichtstabilisator enthält.

10. Zwischenschichtfilm für Verbundglas nach einem der Ansprüche 4 bis 9, wobei die Glasübergangstemperatur der ersten Schicht 30 °C oder weniger beträgt.

11. Zwischenschichtfilm für Verbundglas nach einem der Ansprüche 1 bis 10, wobei das Polyvinylacetalharz ein Polyvinylbutyralharz ist.

12. Zwischenschichtfilm für Verbundglas nach einem der Ansprüche 1 bis 11, ferner umfassend mindestens eine Art eines ersten Metallatoms, ausgewählt aus der Gruppe bestehend aus einem Alkalimetall, Zink und Aluminium.

13. Zwischenschichtfilm für Verbundglas nach Anspruch 12, wobei der Gehalt des ersten Metallatoms in dem Zwischenschichtfilm 150 ppm oder weniger beträgt.

14. Verbundglas, umfassend:
ein erstes Verbundglaselement;
ein zweites Verbundglaselement; und
den Zwischenschichtfilm für Verbundglas nach einem der Ansprüche 1 bis 13,
wobei der Zwischenschichtfilm für Verbundglas zwischen dem ersten Verbundglaselement und dem zweiten Verbundglaselement angeordnet ist.

## Revendications

1. Un film intercouche pour verre feuilleté ayant une structure à une couche ou une structure à deux couches ou plus, comprenant
une résine de polyvinylacétal, un plastifiant, un stabilisant à la lumière à base d'amine encombrée, un inhibiteur d'oxydation ayant un atome de soufre et un inhibiteur d'oxydation ayant squelette phénolique différent de l'inhibiteur d'oxydation ayant un atome de soufre.

2. Le film intercouche pour verre feuilleté selon la revendication 1, dans lequel l'inhibiteur d'oxydation ayant un atome de soufre a un groupe alkyle de 3 à 16 atomes de carbone ou a un squelette de 2,6-di-t-butylphénol.

3. Le film intercouche pour verre feuilleté selon la revendication 1 ou 2, dans lequel le stabilisant à la lumière à base d'amine encombrée est un stabilisant à la lumière à base d'amine encombrée dans lequel un groupe alkyle ou un groupe alkoxy est lié à l'atome d'azote d'une structure de pipéridine.

4. Le film intercouche pour verre feuilleté selon l'une quelconque des revendications 1 à 3, ayant une structure à deux couches ou plus et étant pourvu d'une première couche et d'une seconde couche disposée sur un premier côté de la surface de la première couche,
dans lequel la première couche contient la résine de polyvinylacétal et le plastifiant, et
la deuxième couche contient la résine de polyvinylacétal et le plastifiant.

5. Le film intercouche pour verre feuilleté selon la revendication 4, ayant une structure à trois couches ou plus et étant pourvu d'une troisième couche disposée sur un second côté de surface opposé à la première surface de la première couche,
dans lequel la troisième couche contient la résine de polyvinylacétal et le plastifiant.

6. Le film intercouche pour verre feuilleté selon la revendication 4 ou 5, dans lequel le stabilisant à la lumière à base d'amine encombrée, l'inhibiteur d'oxydation ayant un atome de soufre et l'inhibiteur d'oxydation ayant un squelette de phénol sont contenus dans la même couche.

7. Le film intercouche pour verre feuilleté selon l'une quelconque des revendications 4 à 6, dans lequel la première couche contient le stabilisant à la lumière à base d'amine encombrée, l'inhibiteur d'oxydation ayant un atome de soufre et l'inhibiteur d'oxydation ayant un squelette de phénol.

8. Le film intercouche pour verre feuilleté selon l'une quelconque des revendications 4 à 7, dans lequel une couche ayant une température de transition vitreuse plus élevée parmi la première couche et la seconde couche contient le stabilisant à la lumière à base d'amine encombrée.

9. Le film intercouche pour verre feuilleté selon l'une quelconque des revendications 4 à 8, étant pourvu d'une troisième couche disposée sur un second côté de surface opposé à la première surface de la première couche,
dans lequel une couche a une température de transition vitreuse supérieure parmi la première couche et la troisième couche contient le stabilisant à la lumière à base d'amine encombrée.

10. Le film intercouche pour verre feuilleté selon l'une quelconque des revendications 4 à 9, dans lequel la température de transition vitreuse de la première couche est de 30 °C ou moins.

11. Le film intercouche pour verre feuilleté selon l'une quelconque des revendications 1 à 10, dans lequel la résine de polyvinylacétal est une résine de polyvinylbutyral.

12. Le film intercouche pour verre feuilleté selon l'une quelconque des revendications 1 à 11, comprenant en outre au moins un type de premier atome de métal choisi parmi le groupe constitué d'un métal alcalin, du zinc et de l'aluminium.

13. Le film intercouche pour verre feuilleté selon la revendication 12, dans lequel la teneur en premier atome de métal dans le film intercouche est de 150 ppm ou moins.

14. Verre feuilleté comprenant:
un premier élément en verre feuilleté;
un second élément en verre feuilleté; et
le film intercouche pour verre feuilleté selon l'une quelconque des revendications 1 à 13,
le film intercouche pour verre feuilleté étant disposé entre le premier élément en verre feuilleté et le deuxième élément en verre feuilleté.
